(19) Europäisches Patentamt
European Patent Office
Office européen des brevets

(11) Publication number: 0 103 392 B1

# (12) EUROPEAN PATENT SPECIFICATION

(45) Date of publication of patent specification: 22.07.87

(51) Int. Cl.[4]: C 08 G 59/10, C 08 G 59/22, C 08 G 59/38, C 08 G 59/18

(21) Application number: 83304542.0

(22) Date of filing: 05.08.83

## (54) Fortified epoxy resin compositions and process for the preparation thereof.

(30) Priority: 12.08.82 CA 409305

(43) Date of publication of application: 21.03.84 Bulletin 84/12

(45) Publication of the grant of the patent: 22.07.87 Bulletin 87/30

(84) Designated Contracting States: BE CH DE FR GB IT LI NL SE

(56) References cited:
EP-A-0 012 714
DE-A-1 720 911
FR-A-2 164 887
US-A-3 403 199

PATENT ABSTRACTS OF JAPAN, vol. 3, no. 63, May 30, 1979, page 97 C47

CHEMICAL ABSTRACTS, vol. 99, no. 12, September 19, 1983, page 32, no. 89027d, Columbus, Ohio, US P.D. McLEAN et al.: "Fortifiers for epoxy-amine systems"

(73) Proprietor: Canadian Patents and Development Limited Société Canadienne des Brevets et d'Exploitation Limitée
275 Slater Street
Ottawa Ontario, K1A 0R3 (CA)

(72) Inventor: McLean, Paul Douglas
29 Oakwood Avenue
Nepean Ontario (CA)
Inventor: Garton, Andrew
1972 Oakdean Crescent
Ottawa Ontario (CA)
Inventor: Scott, Robert Frederick
48 Highwood Drive
Nepean Ontario (CA)

(74) Representative: Lambert, Hugh Richmond et al
D. YOUNG & CO. 10 Staple Inn
London, WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 103 392 B1

Courier Press, Leamington Spa, England.

**Description**

This invention relates to fortified epoxy resin compositions and to a process for the preparation thereof.

Epoxy resin matrices are usually two-component systems, comprising a resin component [e.g. a diglycidyl ether of bisphenol A (DGEBA)] and a crosslinking agent [e.g. p,p'diaminodiphenylmethane (DDM)]. Diluents or fillers are also often added for economic or processing reasons. The resin and curing agent are mixed and "cured", usually at elevated temperatures. The above matrix would typically have a strength of 85 MPa, a modulus of 2800 MPa, a glass transition temperature ($T_g$, a maximum use temperature) of ~150°C and would fracture in an essentially brittle fashion (H. Lee and K. Neville, "Handbook of Epoxy Resins", McGraw-Hill, New York, 1967). Considerable effort has been expended to improve on these properties.

However, no completely satisfactory solution currently exists because improvement in one property has been gained only at the expense of another (e.g. solvent resistance, $T_g$, ductility, processability, cost).

Many curing agents or hardeners have been used in epoxy resin systems, in particular amines such as methylene dianiline and tetraethylenetriamine. In some cases, adducts of these same amines with mono- or diepoxides have been used as curing agents. In US—A—4 182 831, January 8, 1980, Hicks, polyepoxide resins are reacted with an aliphatic primary amine mixture, then further reacted with a monoepoxide, US—A—4 182 832, January 8, 1980, Zondler et al, describes as curing agents for epoxy resins, adducts of substituted 1,4-diaminobutanes and liquid epoxides. US—A—4 195 152, March 25, 1980, Floyd, describes an adduct of N-alkylpolyamines and monoepoxides as epoxy resin curing agents. US—A—4 197 389, April 8, 1980, Becker et al, describes a hardening agent (curing agent) for epoxy resins which is a reaction product of an aliphatic or heterocyclic polyamine, a polyalkylene polyether polyol and at least one polyepoxide. These patents are typical of the more complex curing agents being developed.

Antiplasticization in highly crosslinked epoxy resin systems has been reported in the literature. For instance, N. Hata et al, in J. Appl. Polym. Sci., 17(7), pp 2173—81, 1973, describe pentachlorobiphenyl as the most effective antiplasticizer, and dibutylphthalate and 2,2-bis[4-(2hydroxy-3-phenoxy-propoxy)phenyl]propane as less effective antiplasticizers. There evidently has been little recent interest in this, possibly because materials such as pentachlorobiphenyl are environmentally objectionable.

The present invention provides an alternative approach to the improvement of the properties of epoxy resins by adding reaction products to the resin which act as fortifiers.

The incorporation of such reaction products, i.e. the reaction product of an aromatic amine and an epoxide, into curable epoxy resins is known for various purposes. For example, US—A—3 860 541 (corresponding to FR—A—2 164 887) discloses epoxy resin compositions containing, as the hardener or curing agent, the combination of (i) a liquid polyamine and (ii) an adduct of an epoxy resin, e.g. bisphenol-A epoxide, with an aliphatic or aromatic amine, such adduct containing free amino groups. Such curing agent combinations are alleged to provide epoxy resin compositions of improved storage stability but which cure rapidly at moderately elevated temperature. The utility of such compositions is said to be in the field of adhesives, and compression moulding compositions. The epoxy compounds used in the formation of the adduct component of the hardener are essentially symmetrical diepoxy compounds, such as the aforesaid bisphenol-A epoxide, or the condensate of the sebacic acid ester of 3-(2'-hydroxyethyl)-5,5-dimethylhydantoin and epichlorohydrin in a molar ratio of 1:2.

Also in US—A—3 403 199 curable epoxy compositions are disclosed comprising as the curable component, the combination of (i) a glyamine prepolymer, i.e. the reaction product of a diglycidyl ether and a selected amine including, inter alia, aromatic chlorine hindered diamines, and (ii) a diepoxycycloaliphatic ether. As the curing agent there is used a liquid aromatic polyamine. Such compositions are said to be useful as embedding, encapsulating, laminating, casting and coating applications. Again the diepoxy compounds used in preparing the glyamine prepolymer are essentially symmetrical compounds, e.g. 1,4-butanediol diglycidyl ether.

In contrast to the foregoing, the present invention provides high strength curable epoxy resin compositions which are curable to strong high modulus compositions having a ductile mode of fracture (i.e. the slope of the stress-strain curve is negative at the point of failure). Such high strength compositions are essentially provided by incorporating into the epoxy composition a fortifier which is an adduct of an aromatic amine and a diepoxide having two vicinal epoxy groups of different reactivity, said fortifier optionally being further reacted with a mono-isocyanate or a mono- or di-nitrile. Alternatively, the fortifier may be an adduct of an aromatic amine with a monoepoxide, in which case the adduct is additionally reacted with said mono-isocyanate or mono- or di-nitrile.

In one aspect, therefore, the present invention provides a curable epoxy resin composition, capable upon curing of giving a high strength product, said composition comprising a resin-forming polyepoxide and an amine curing agent, characterised in that the composition additionally contains, as a fortifier, up to 40 parts by weight, per hundred parts of said resin-forming polyepoxide, of (i) a reaction product obtained by reacting (a) an aromatic amine of the formula

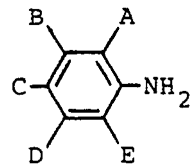

in which A to E are each hydrogen, $C_1$—$C_4$ alkyl, halogen, halogenated $C_1$—$C_4$ alkyl, phenyl, halogenated phenyl, hydroxyl, amino, an alkylene-linked aromatic amine or amide moiety, or a

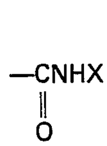 or 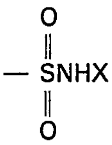

group where X is H, $C_1$—$C_4$ alkyl or phenyl, and (b) a diepoxy compound having two vicinal epoxy groups, one of which is less reactive than the other, said reaction product optionally being further reacted with a mono-isocyanate or a mono- or di-nitrile, or (ii) the reaction product of such an aromatic amine with a mono-epoxide of the formula

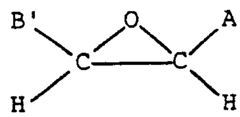

wherein A′ and B′ are each hydrogen, halogen, $C_1$—$C_4$ alkyl, halogenated $C_1$—$C_4$ alkyl, phenyl or halogenated phenyl, or an alkylene-linked aromatic ether moiety, in which case that reaction product is further reacted with said mono-isocyanate or mono- or di-nitrile.

In a second aspect, the invention provides a method of fortifiying amine-cured polyepoxy resin compositions obtained by heat curing a reaction mixture comprising a resin-forming polyepoxide and an amine curing agent, characterised by incorporating in to the reaction mixture prior to curing up to 40 parts by weight, per 100 parts of said polyepoxide, of a fortifying agent as defined above, and heat curing the mixture so formed.

Preferably in preparing the fortifier about 1 mole of amine (i) is heated with about 0.8 to 6 moles (preferably 1—4 moles) of the mono- or di-epoxide at the equivalent of about 75—190°C for about 1 h.

Various physical properties of epoxy resins fortified in accordance with this invention are illustrated in the accompanying drawings in which:

Figure 1 is a graph showing load vs. extension curves for varying concentrations of fortifier in a cured epoxy resin system.

Figure 2 is a graph showing the effect of fortifier concentration on tensile strength in a cured epoxy resin system for two different fortifiers.

Figure 3 is a graph showing the variation in tensile strength with fortifier concentration for two different resin systems.

The polyepoxide to be fortified in accordance with this invention can be any resin-forming polyepoxide containing a plurality of reactive 1,2-epoxy groups and curable by reaction with an amine curing agent.

These polyepoxide materials can be monomeric or polymeric, saturated or unsaturated, aliphatic, cycloaliphatic, aromatic or heterocyclic, and may be substituted, if desired, with other substituents besides the epoxy groups, e.g. hydroxyl groups, ether radicals and aromatic halogen atoms.

A widely used class of polyepoxides which can be fortified according to the practice of the present invention includes the resinous epoxy polyethers obtained by reacting an epihalohydrin, such as epichlorohydrin, with either a polyhydric phenol or a polyhydric alcohol. An illustrative, but by no means exhaustive, listing of suitable dihydric phenols includes 4,4′-isopropylidene bisphenol, 2,4′-dihydroxydiphenylethylmethane, 3,3′-dihydroxydiphenyldiethylmethane, 3,4′-dihydroxydiphenylmethylpropylmethane, 2,3′-dihydroxydiphenylethylphenylmethane, 4,4′-dihydroxydiphenylpropylphenylmethane, 4,4′-dihydroxydiphenylbutylphenylmethane, 2,2′-dihydroxydiphenylditolylmethane and 4,4′-dihydroxydiphenyltolylmethylmethane. Other polyhydric phenols which may also be co-reacted with an epihalohydrin to provide these epoxy polyethers are such compounds as resorcinol, hydroquinone and substituted hydroquinones, e.g. p-tert-butylhydroquinone.

Among the polyhydric alcohols which can be co-reacted with an epihalohydrin to provide these resinous epoxy polyethers are such compounds as ethylene glycol, propylene glycols, butylene glycols, pentane diols, bis(4-hydroxycyclohexyl)dimethylmethane, 1,4-dimethylolbenzene, glycerol, 1,2,6-hexanetriol, trimethylolpropane, mannitol, sorbitol, erythritol, pentaerythritol, their dimers, trimers and higher polymers, e.g. polyethylene glycols, polypropylene glycols, triglycerol, dipentaerythritol, polyallyl alcohol, polyhydric thioethers, such as 2,2′-, 3,3′-tetrahydroxydipropylsulfide, mercapto alcohols such as α-mono-

thioglycerol and α,α'-dithioglycerol, polyhydric alcohol partial esters, such as monostearin and pentaerythritol monoacetate, and halogenated polyhydric alcohols, such as the monochlorohydrins of glycerol, sorbitol and pentaerythritol.

Another class of polymeric polyepoxides which can be cured by means of the amine curing agents and fortified, includes the epoxy novolac resins obtained by reacting, preferably, in the presence of a basic catalyst, e.g. sodium or potassium hydroxide, an epihalohydrin, such as epichlorohydrin, with the resinous condensate of an aldehyde, e.g. formaldehyde, and either a monohydric phenol, e.g. phenol itself, or a polyhydric phenol. Further details concerning the nature and preparation of these epoxy novolac resins can be obtained in H. Lee and K. Neville, "Handbook of Epoxy Resins".

Other suitable polyglycidyl compounds are the polyglycidyl esters of polycarboxylic acids, such as the polyglycidyl esters of adipic acid and phthalic acid. Polyglycidyl esters of polycarboxylic acids are described in detail in US—A—2 870 170 to Payne et al. Also suitable are polyglycidyl compounds produced by reacting epichlorohydrin with aromatic amines such as aniline, 2,6-dimethylaniline, p-toluidine, m-chloroaniline, p-aminodiphenyl, m-phenylenediamine, p-phenylenediamine and 4,4'-diaminodiphenyl methane, or with amino phenols such as p-aminophenol, 5-amino-1-n-naphthol, 4-aminoresorcinol, 2-methyl-4-aminophenol and 2-chloro-4-aminophenol. Specific compounds include, among others, N,N-diglycidylaniline, N,N-diglycidyl-2,6-dimethylaniline, N,N,N',N'-tetraglycidyl-4,4'-diaminodiphenyl methane and the triglycidyl derivative of p-aminophenol wherein the aminohydrogen and OH hydrogen atoms are replaced by glycidyl groups.

It will be appreciated by those skilled in the art that the polyepoxide compositions which can be cured and fortified according to the practice of the present invention are not limited to those containing the above described polyepoxides, but that these polyepoxides are to be considered merely as being representative of the class of polyepoxides as a whole.

The amine curing agents are any aromatic or aliphatic amine curing agents (hardeners) known in the art. Typical examples are methylene dianiline (MDA), metaphenylenediamine and other aromatic polyamines, diethylamine hydrochloride, diethylenetriamine, triethylenetetramine, diethylaminopropylamine and polyoxypropyleneamines. Amine adducts such as reaction products of aliphatic amines with epoxide monomers and amino group-containing polyamides are known amine curing agents and would be operative. Heterocyclic amines such as N-aminoethylpiperazine and ethylmethylimidazole may also be used. We prefer the aromatic polyamines particularly when improved high temperature properties are important.

Comparative tests with and without amine curing agents have confirmed that the fortifiers are not effective curing agents. For example, a fortifier formed from vinylcyclohexenedioxide and aniline was added to a resin with and without the amine curing agent. Compositions containing 15 and 30 parts by wt. of fortifier per hundred of resin, but no curing agent, did not gel when run through the normal cure cycle. With the curing agent plus fortifier, a significant increase in strength and modulus was achieved.

The aromatic amine reactant used to form the fortifier has the general formula:

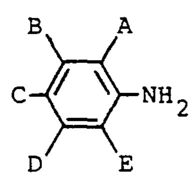

in which A to E are selected from hydrogen, $C_1$—$C_4$ alkyl, halogen, halogenated $C_1$—$C_4$ alkyl, phenyl, halogenated phenyl, hydroxyl, amino, an alkylene-linked aromatic amine or amide moiety,

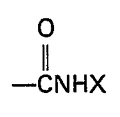

and

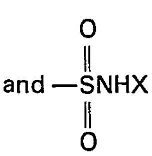

where X is selected from H, $C_1$—$C_4$ alkyl and phenyl. The alkylene groups may have from 1—4 carbon atoms. Suitable compounds include aniline, methylene dianiline, m-phenylenediamine, 4-chloroaniline, 4-bromoaniline, 2,4,6-tribromoaniline, 2,4,6-trichloroaniline, α,α,α-trifluoro-m-toluidene, ortho-toluidine, m- and p-aminophenol, ortho-tolidene, sulfanilamide and anthranilamide.

The monoepoxide reactant has the general formula

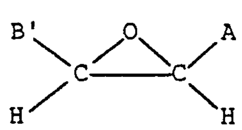

in which A′ and B′ are selected from hydrogen, halogen, $C_1$—$C_4$ alkyl, halogenated $C_1$—$C_4$ alkyl, phenyl, halogenated phenyl, and an alkylene-linked aromatic ether moiety. Suitable monoepoxides include ethylene oxide, propylene oxide, epichlorohydrin, styrene oxide and phenylglycidyl ether (PGE).

The alternative diepoxide reactant contains two vicinal epoxide rings, one of which is less reactive than the other (for structural or chemical reasons). The reactivity of the less reactive epoxide group may be lower because of, e.g., being attached to an alicyclic moiety or by substituents on the alpha-carbons or because of its steric configuration. Suitable dioxides include vinylcyclohexene dioxide, limonene dioxide, bis(2,3-epoxycyclopentyl)ether (liquid isomer) and p-epoxycyclopentylphenyl glycidyl ether.

The fortifier is formed by reacting the aromatic amine and mono- or diepoxide together at a selected temperature, usually within about 70°C to 200°C, for a time within about 15 min to about 4 h. Preferably, reaction conditions are selected to be equivalent to 75—190°C for about 1—2 h at a ratio of 1 mole amine to 1 to 4 moles epoxide. The temperature (and time) are selected to give the desired degree and mode of reaction yet not boil off the more volatile components. Depending on exotherms encountered, it may be necessary to cool the reaction vessel to maintain the desired reaction temperature. Typical temperatures and times found operative are illustrated in the examples. Catalysts can be used to facilitate the reaction if desired but we have not found them necessary. Suitable catalysts for the fortifier formation include those of the type of diethylamine hydrochloride, ethylmethylimidazole, alphamethylbenzyldimethylamine and 2-hydroxybenzyldimethylamine. Suitable catalyst concentrations are about 0.1—0.3%.

The reaction products are a complex mixture in each case and were used as fortifiers without purification or separation. The reaction products were viscous oils or low melting point solids. Chromatographic analysis of a typical fortifier showed the presence of at least 12 chemical components in measurable amounts. Several fortifiers have been retested after at least one year of storage and they showed no signs of deterioration.

We have found that (in preparing the fortifiers) when only part of the desired amount of one of the reactants is added initially and reacted, and the remainder introduced later, the reaction product is different than if the full amount had been reacted at one time. Using this variation in properties, it is possible to select both reactants and reaction stages to optimize properties of the fortifier for a particular purpose. It is possible to add a different mono- or diepoxide at a second stage of the reaction to vary the properties further. In the same manner, variations or staged additions of the same or different aromatic amines change the properties of the fortifier somewhat. Thus, it is possible to tailor the fortifier to obtain a desired balance of properties for a particular resin system. For each resin-curing agent system, the fortifier is selected to bestow increased tensile strength and modulus on curing.

The concentration of fortifier relative to the resin (resin-forming polyepoxide) may range from an effective amount up to about 40 parts per hundred parts of resin (PHR). Amounts within the range of 5—30 PHR normally are preferred.

These fortifiers will have some free hydroxyl groups available for further reaction. We have found that reaction with isocyanates or nitriles gives fortifiers which bestow increased strengths on the resin (compared to the original fortifier). Any monoisocyanate may be used with typical ones being methyl-, ethyl-, propyl- and phenylisocyanates and halogenated derivatives thereof. Alternatively, nitrile reactants may be used and these may be mono- or dinitriles. Suitable nitrile reactants include p-aminobenzonitrile, phthalonitrile, malononitrile, succinonitrile, butyronitrile, adiponitrile and acrylonitrile. Halogenated derivatives of these nitriles can be used. Normally, the amount of isocyanate or nitrile will be sufficient to react with all hydroxyl groups present. The reaction conditions with nitrile reactants generally are about 1 h at about 150°C though variations are possible. With the isocyanates, they are added cold and usually in stages since the reaction is exothermic, preferably with the final temperature controlled to be about 120°C.

The final cure conditions of the resin-forming polyepoxide + amine curing agent + fortifier generally follow conventional epoxy resin cure techniques. Usually at least two cure stages are utilized, with preferred cure sequences being within the ranges:

initial stage 60°—100°C for 30 min—4 h
intermediate stage 100°—130°C for 1 h—6 h
final stage 140°—200°C for 1 h—16 h

Those skilled in the art will be able to determine a suitable cure cycle for any particular system.

The following examples are illustrative.

Example 1

Vinylcyclohexene dioxide was mixed with aniline at a mole ratio of 2:1 and 0.25% of diethylamine hydrochloride added as catalyst. The mixture was heated at 190°C for 2 h to give the fortifier designated VCDA. This fortifier was mixed with Epon 828 containing 30 PHR methylene dianiline curing agent and cured at 100°C for 3 h, + 125°C for 2 h, + 175°C for 4 h. The load vs grip extension curves for 0, 10, 20, 30 and 40 PHR of this fortifier in this system are shown in Figure 1. The tensile strength results are shown for varying concentrations of fortifier in Figure 2 and the strength is seen to increase with concentration of fortifier, i.e. from about 85 MPa to about 120 MPa at 35 PHR fortifier.

Example 2

Using as resin-forming polyepoxide, the diglycidyl ether of bisphenol-A (Epon 828) but with aliphatic amine curing agents, and using the fortifier of Example 1, compounding and curing were carried out as follows:

A mixture of 34 parts of a polyoxypropyleneamine (Jeffamine D400® — trademark) and 4 parts of diethylenetriamine was prepared as curing agent, and mixed with 100 parts of Epon 828 and 30 parts of the vinylcyclohexene dioxide-aniline fortifier of Example 1, then cured at 50°C for 1 h, + 80°C for 1 h, + 125°C for 4 h. The tensile test results on the cured product were as follows:

| Fortifier | Tensile psi (MPa) |
|---|---|
| none | 7802 (53.8) |
| VCDA | 8132 (56.1) |

Example 3

In other runs, fortifiers were made using phenylglycidylether, aniline or chloroaniline and ethyl or phenyl isocyanate. These fortifiers were compounded with Epon 828 resin and 30 PHR MDA and cured at 100°C for 7 h, + 160°C for 8 h. The results are summarized in Table 1.

Note that brittle systems were made ductile by increasing the proportion of epoxide in the fortifier.

TABLE 1

The Effect of Synthetic Fortifiers on the Tensile Strength of Epon 828 and 30 PHR MDA

| Components of Synthetic Fortifier | | | | | | |
|---|---|---|---|---|---|---|
| Epoxy | Amine | Isocyanate | Ratio | PHR | Tensile Strength (psi) (MPa) | Failure Mode |
| PGE | Aniline | Phenyl | 1:1:1 | 15 | 15698 (108.2) | Brittle |
| | | | | 20 | 15910 (109.7) | Brittle — Yield |
| | | | | 25 | 16062 (110.7) | Brittle |
| PGE | Aniline | Phenyl | 2:1:1 | 15 | 15630 (107.8) | Ductile |
| | | | | 20 | 16146 (111.3) | Ductile |
| | | | | 25 | 17089 (117.8) | Ductile |
| | | | | 27.5 | 16783 (115.7) | Ductile |
| PGE | Aniline | Ethyl | 1:1:1 | 15 | 15874 (109.5) | Ductile |
| | | | | 20 | 16284 (112.3) | Ductile |
| | | | | 25 | 16496 (113.7) | Ductile |
| PGE | Chloro-Aniline | Ethyl | 1:1:1 | 15 | 15687 (108.2) | Ductile |
| | | | | 20 | 16530 (114.0) | Ductile |
| | | | | 25 | 16770 (115.6) | Ductile |
| | | | | 27.5 | 16753 (115.5) | Ductile |

Example 4

The effect of fortifying an epoxy novolac resin (DEN 431®) — Dow Chemical) compared to Epon 828 was investigated. Varying concentrations of the fortifier VCDA (prepared as in Example 1) were added to each resin and the systems cured with 30 PHR methylene dianiline using the cure cycle 100°C for 3 h, + 125°C for 2 h, + 175°C for 4 h. The results are shown in Figure 3. The novolac resin consistently had a strength about 10 MPa higher than the Epon 828 and tensile strengths over 130 MPa (over 19000 psi) were realized.

Example 5

A nitrile-modified fortifier was prepared by reacting one mole of the VCDA fortifier of Example 1 with one mole of p-aminobenzonitrile by heating to 150°C for 1 h. Upon compounding various amounts of this fortifier with Epon 828 and 30 PHR MDA and curing as in Example 1, the following results were obtained.

| Amount of Fortifier | Tensile Strength psi (MPa) |
|---|---|
| 30 PHR | 17430 (120.2) (ductile) |
| 35 PHR | 18030 (124.3) (ductile) |
| 40 PHR | 18330 (126.4) (ductile) |

Example 6

A fortifier was made from vinylcyclohexene dioxide and sulfanilamide at a mole ratio of 2.7:1 as in Example 1 except heating to 130°C for 1 h. This fortifier (VCDSAA) was mixed at 2 proportions with Epon 828 resin containing 30 PHR methylene dianiline curing agent and cured as in Example 1. The results are summarized in Table 2.

TABLE 2

| Fortifier VCDSAA PHR | Epoxy resin Epon 828 | Cross-Linking Amine, MDA | Tensile Strength psi (MPa) | $T_g$ °C |
|---|---|---|---|---|
| 10 | 100 | 30 | 14013 (96.6) | 162 |
| 30 | 100 | 30 | 17443 (120.3) | 147 |

Example 7

A fortifier was made from vinylcyclohexene dioxide and anthranilamide (O-aminobenzamide) at a mole ratio of 2:1 with heating to 130°C for 1 h. This fortifier was mixed at 2 proportions with Epon 828 resin and cured as in Example 1. The results are summarized in Table 3.

TABLE 3

| Fortifier VCDANT PHR | Epoxy resin Epon 828 | Cross-Linking Amine, MDA | Tensile Strength psi (MPa) | $T_g$ °C |
|---|---|---|---|---|
| 20 | 100 | 30 | 14913 (102.8) | 155 |
| 30 | 100 | 35 | 16500 (113.8) | 148 |

Example 8

A cycloaliphatic epoxy resin (a cyclohexane diepoxy carboxylate) known as Araldite® (trademark) CY 179 was fortified and cured. The fortifiers were VCDA and VCDSAA prepared as above and VCDMAP. The latter was prepared from vinylcyclohexene dioxide and meta-aminophenol in a mole ratio of 3:1 with heating to 120°C for 1 h. Curing was for 3 h at 100°C and then 6 h at 180°C. The results are summarized in Table 4.

TABLE 4

| Fortifier PHR | Resin CY 179 | Cross-Linking Amine (MDA) PHR | Tensile Strength psi (MPa) | $T_g$ °C |
|---|---|---|---|---|
| 10 VCDA | 100 | 65 | 14970 (103.2) | 142 |
| 10 VCDMAP | 100 | 65 | 15420 (106.3) | 150 |
| 10 VCDSAA | 100 | 65 | 16350 (112.7) | 145 |

## Claims

1. A curable epoxy resin composition, capable upon curing of giving a high strength product, said composition comprising a resin-forming polyepoxide and an amine curing agent, characterised in that the composition additionally contains, as a fortifier, up to 40 parts by weight, per hundred parts of said resin-forming polyepoxide, of (i) a reaction product obtained by reacting (a) an aromatic amine of the formula

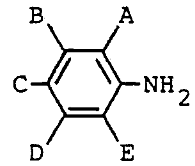

in which A to E are each hydrogen, $C_1$—$C_4$ alkyl, halogen, halogenated $C_1$—$C_4$ alkyl, phenyl, halogenated phenyl, hydroxyl, amino, an alkylene-linked aromatic amine or amide moiety, or a

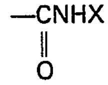 or 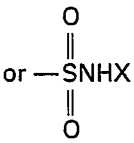

group where X is H, $C_1$—$C_4$ alkyl or phenyl, and (b) a diepoxy compound having two vicinal epoxy groups, one of which is less reactive than the other, said reaction product optionally being further reacted with a mono-isocyanate or a mono- or di-nitrile, or (ii) the reaction product of such an aromatic amine with a mono-epoxide of the formula

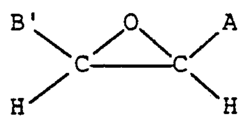

wherein A′ and B′ are each hydrogen, halogen, $C_1$—$C_4$ alkyl, halogenated $C_1$—$C_4$ alkyl, phenyl or halogenated phenyl, or an alkylene-linked aromatic ether moiety, in which case that reaction product is further reacted with said mono-isocyanate or mono- or di-nitrile.

2. A composition according to claim 1, characterised in that in the preparation of the fortifier the amine is reacted with said mono- or di-epoxide at a molar ratio of from 1:0.8 to 1:6.

3. A composition according to claim 2, wherein said molar ratio is from 1:1 to 1:4.

4. A composition according to claim 1, 2 or 3, wherein the fortifier is as defined under (i) and the di-epoxide used to prepare the fortifier is vinylcyclohexene dioxide.

5. A composition according to any one of the preceding claims, characterised in that the fortifier is present in an amount of from 5—30 parts by weight per hundred parts of said resin-forming polyepoxide.

6. A composition according to any one of the preceding claims, wherein the amine curing agent is methylene dianiline, N-aminoethylpiperazine, metaphenylenediamine or ethylmethylimidazole.

7. A composition according to any one of claims 1 to 6, wherein the fortifier is as defined under (ii) or is a reaction product as defined under (i) which has been further reacted with a mono-isocyanate or mono- or di-nitrile, wherein said isocyanate or nitrile is selected from methyl isocyanate, ethyl isocyanate, phenyl isocyanate, aminobenzonitrile, phthalonitrile, malononitrile, succinonitrile, adiponitrile, or a halogenated derivative of one of those isocyanates or nitriles.

8. A fortified, cross-linked polyepoxy resin comprising a composition according to any one of claims 1—7, which has been cured to effect crosslinking the resin-forming polyepoxide by said amine curing agent.

9. A method of fortifying amine-cured polyepoxy resin compositions obtained by heat curing a reaction mixture comprising a resin-forming polyepoxide and an amine curing agent, characterised by incorporating in to the reaction mixture prior to curing up to 40 parts by weight, per 100 parts of said polyepoxide, of a fortifying agent as defined in any one of claims 1—4 or 7.

10. A method according to claim 9, characterised in that the fortifying agent is added to the curable resin composition in an amount of from 5—30 parts by weight, per hundred parts of resin.

## Patentansprüche

1. Härtbare Expoxyharzzusammensetzung, die beim Härten ein Produkt hoher Festigkeit ergeben kann, wobei die Zusammensetzung ein harzbildendes Polyepoxid und ein Aminhärtungsmittel umfaßt, dadurch gekennzeichnet, daß die Zusammensetzung zusätzlich als Verstärker bis zu 40 Gewichtsteile je 100

Gewichtsteile des harzbildenden Polyepoxids eines (i) Reaktionsproduktes, das durch Umsetzung (a) eines aromatischen Amins der Formel

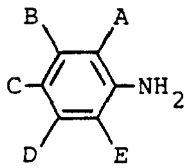

worin A bis E jeweils ein Wasserstoffatom, $C_1$—$C_4$-Alkyl, Halogen, halogeniertes $C_1$—$C_4$-Alkyl, Phenyl, halogeniertes Phenyl, Hydroxyl, Amino, einen alkylenvernetzten aromatischen Amin- oder Amidrest oder eine Gruppe

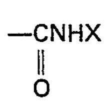 oder 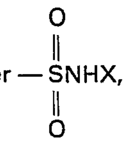

worin X H, $C_1$—$C_4$-Alkyl oder Phenyl bedeutet, sind, und (b) einer Diepoxyverbindung mit zwei vicinalen Epoxygruppen, von denen eine weniger reaktiv als die andere ist, wobei das Reaktionsprodukt gegebenenfalls zusätzlich mit einem Monoisocyanat oder einem Mono- oder Dinitril umgesetzt wurde, erhalten wurde, oder (ii) des Reaktionsproduktes eines solchen aromatischen Amins mit einem Monoepoxid der Formel

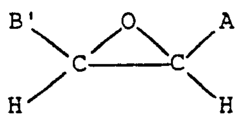

worin A′ und B′ jeweils ein Wasserstoffatom, Halogenatom, $C_1$—$C_4$-Alkyl, halogeniertes $C_1$—$C_4$-Alkyl, Phenyl oder halogeniertes Phenyl oder einen alkylenvernetzten aromatischen Etherrest bedeuten, wobei in diesem Fall das Reaktionsprodukt zusätzlich mit dem Monoisocyanat oder Mono- oder Dinitril umgesetzt wurde, enthält.

2. Zusammensetzung nach Anspruch 1, dadurch gekennzeichnet, daß bei der Herstellung des Verstärkers das Amin mit dem Mono- oder Diepoxid in einem Molverhältnis von 1:0,8 bis 1:6 umgesetzt wird.

3. Zusammensetzung nach Anspruch 2, worin das Molverhältnis 1:1 bis 1:4 ist.

4. Zusammensetzung nach Anspruch 1, 2 oder 3, worin der Verstärker wie unter (i) definiert ist und das zur Herstellung des Verstärkers verwendete Diepoxid Vinylcyclohexendioxid ist.

5. Zusammensetzung nach einem der vorausgehenden Ansprüche, dadurch gekennzeichnet, daß der Verstärker in einer Menge von 5 bis 30 Gewichtsteilen je 100 Teile des harzbildenden Polyepoxids vorliegt.

6. Zusammensetzung nach einem der vorausgehenden Ansprüche, worin das Aminhärtungsmittel Methylendianilin, N-Aminoethylpiperazin, Metaphenylendiamin oder Ethylmethylimidazol ist.

7. Zusammensetzung nach einem der Ansprüche 1 bis 6, worin der Verstärker wie unter (ii) definiert ist oder ein Reaktionsprodukt ist, wie es unter (i) definiert ist, das zusätzlich mit einem Monoisocyanat oder Mono- oder Dinitril umgesetzt wurde, worin das Isocyanat oder Nitril unter Methylisocyanat, Ethylisocyanat, Phenylisocyanat, Aminobenzonitril, Phthalonitril, Malononitril, Succinonitril, Adiponitril oder einem halogenierten Derivat eines jener Isocyanate oder Nitrile ausgewählt ist.

8. Verstärktes vernetztes Polyepoxyharz, das eine Zusammensetzung nach einem der Ansprüche 1 bis 7 umfaßt und welches gehärtet wurde, um eine Vernetzung des harzbildenden Polyepoxids durch das Aminhärtungsmittel zu bewirken.

9. Verfahren zur Verstärkung von amingehärteten Polyepoxyharzzusammensetzung, die durch Hitzehärtung eines Reaktionsgemisches, das ein harzbildendes Polyepoxid und ein Aminhärtungsmittel umfaßt, erhalten wurden, gekennzeichnet durch Einarbeitung von bis zu 40 Gewichtsteilen je 100 Teile des Polyepoxids eines Verstärkungsmittels, wie es in einem der Ansprüche 1 bis 4 oder 7 definiert ist, in das Reaktionsgemisch vor dem Härten.

10. Verfahren nach Anspruch 9, dadurch gekennzeichnet, daß das Verstärkungsmittel zu der härtbaren Harzzusammensetzung in einer Menge von 5 bis 30 Gewichtsteilen je 100 Teile Harz zugegeben wird.

## Revendications

1. Composition de résine époxyde durcissable, à même, après durcissement, de donner un produit à résistance mécanique élevée, ladite composition comprenant un polyépoxyde formant une résine et un agent de durcissement amine, caractérisée en ce que la composition contient en outre, comme agent de

renforcement, jusqu'à 40 parties en poids, pour 100 parties dudit polyépoxyde formant une résine, (i) d'un produit de réaction obtenu en faisant réagir (a) une amine aromatique de formule

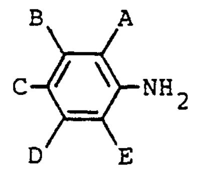

dans laquelle A et E sont chacun l'hydrogène, un groupe alkyle en $C_1$—$C_4$, halogéno, alkyle en $C_1$—$C_4$ halogéné, phényle, phényle halogéné, hydroxyle, amino, un fragment amine ou amide aromatique à liaison alkylène, ou un groupe

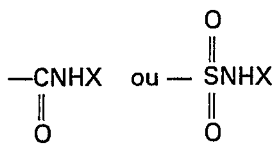

où X est H, un radical alkyle en $C_1$—$C_4$ ou phényle, et (b) un composé diépoxyde possédant deux groupes époxydes voisins, dont l'un d'eux est moins réactif que l'autre, ledit produit de réaction pouvant facultativement être encore mis à réagir avec un monoisocyanate ou un mono- ou un dinitrile, ou (ii) du produit de la réaction d'une telle amine aromatique avec un monoépoxyde de formule

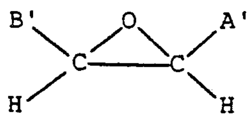

dans laquelle A' et B' sont chacun l'hydrogène, un halogène, un groupe alkyle en $C_1$—$C_4$, alkyle en $C_1$—$C_4$ halogéné, phényle ou phényle halogéné, ou un fragment éther aromatique à liaison alkylène, auquel cas le produit de la réaction est encore mis à réagir avec ledit monoisocyanate ou mono- ou dinitrile.

2. Composition selon la revendication 1, caractérisée en ce que, lors de la préparation de l'agent de renforcement, l'amine est mise à réagir avec ledit mono- ou diépoxyde selon un rapport en moles de 1:0,8 à 1:6.

3. Composition selon la revendication 2, dans laquelle ledit rapport en moles est compris entre 1:1 et 1:4.

4. Composition selon la revendication 1, 2 ou 3, dans laquelle l'agent de renforcement est comme défini en (i), et le diépoxyde utilisé pour préparer l'agent de renforcement est le vinylcyclohexènedioxyde.

5. Composition selon l'une quelconque des revendications précédentes, caractérisée en ce que l'agent de renforcement est présent en une quantité de 5 à 30 parties en poids pour 100 parties dudit polyépoxyde formant une résine.

6. Composition selon l'une quelconque des revendications précédentes, dans laquelle l'agent de durcissement amine est la méthylènedianiline, la N-aminoéthylpipérazine, la métaphénylènediamine ou l'éthylméthylimidazole.

7. Composition selon l'une quelconque des revendications 1 à 6, dans laquelle l'agent de renforcement est comme défini en (ii), ou bien est un produit de réaction comme défini en (i), qui a de plus été mis à réagir avec un monoisocyanate ou un mono- ou un dinitrile, ledit isocyanate ou nitrile étant sélectionné entre l'isocyanate de méthyle, l'isocyanate d'éthyle, l'isocyanate de phényle, l'aminobenzonitrile, le phtalonitrile, le malononitrile, le succinonitrile, l'adiponitrile, ou un dérivé halogéné de l'un de ces isocyanates ou nitriles.

8. Résine polyépoxyde réticulée et renforcée comprenant une composition selon l'une quelconque des revendications 1 à 7, qui a été durcie pour réaliser une réticulation, par ledit agent de durcissement amine, du polyépoxyde formant une résine.

9. Procédé pour renforcer des compositions de résine polyépoxyde durcies sous l'effet d'une amine, obtenues par durcissement, à la chaleur, d'un mélange réactionnel comprenant un polyépoxyde formant une résine et un agent de durcissement amine, caractérisé en ce qu'on incorpore dans le mélange réactionnel, avant le durcissement, jusqu'à 40 parties en poids, pour 100 parties dudit polyépoxyde, un agent de renforcement tel que défini dans l'une quelconque des revendications 1 à 4, ou 7.

10. Procédé selon la revendication 9, caractérisé en ce que l'agent de renforcement est ajouté à la composition de résine durcissable en une quantité de 5 à 30 parties en poids pour 100 parties de résine.

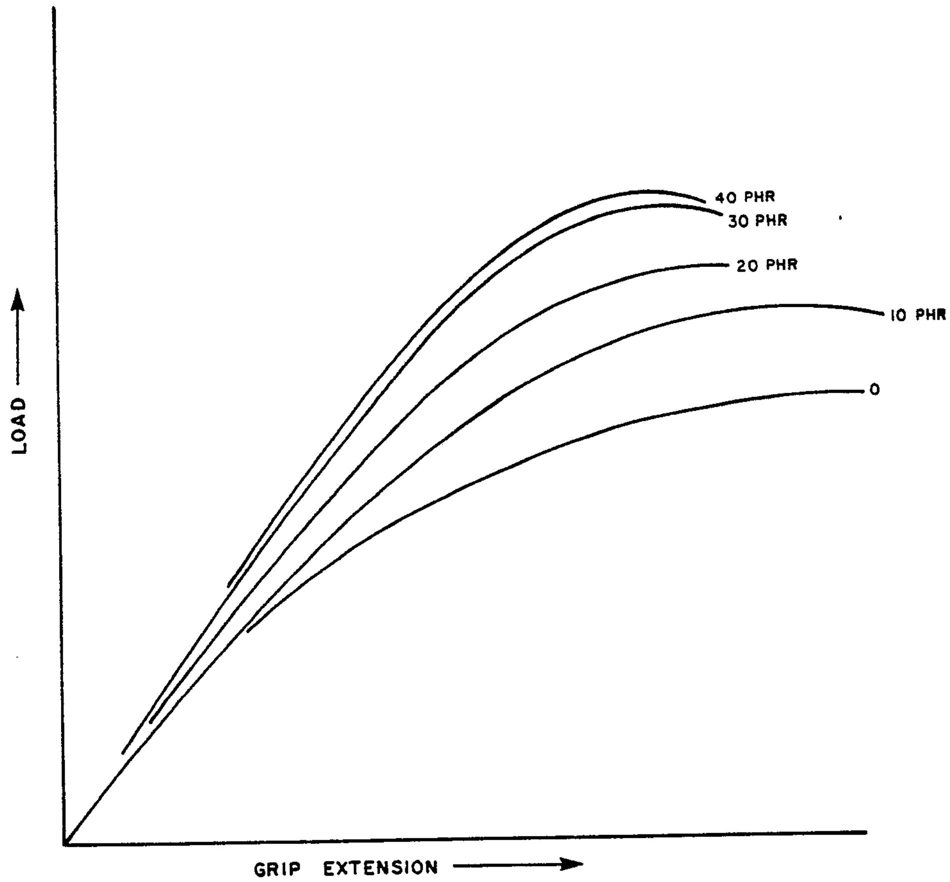


FIG.1

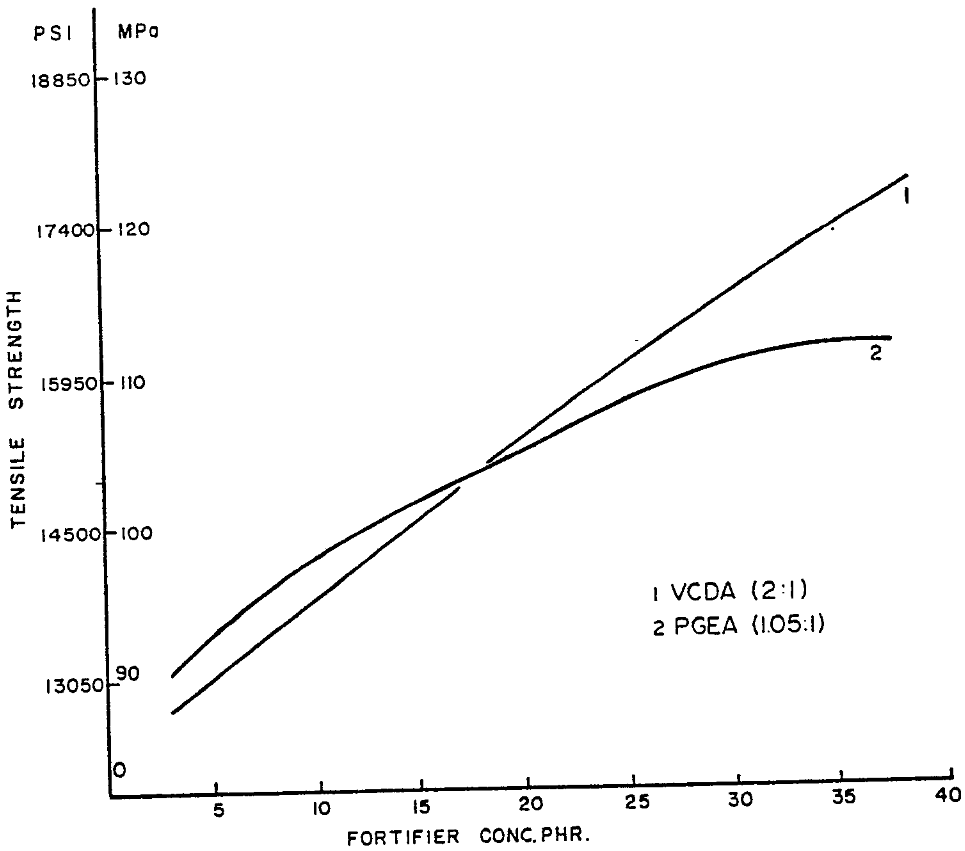
PSI
MPa
18850
130
17400
120
15950
110
14500
100
13050
90
0
TENSILE STRENGTH
5
10
15
20
25
30
35
40
FORTIFIER CONC. PHR.
1
2
1 VCDA (2:1)
2 PGEA (1.05:1)

FIG. 2

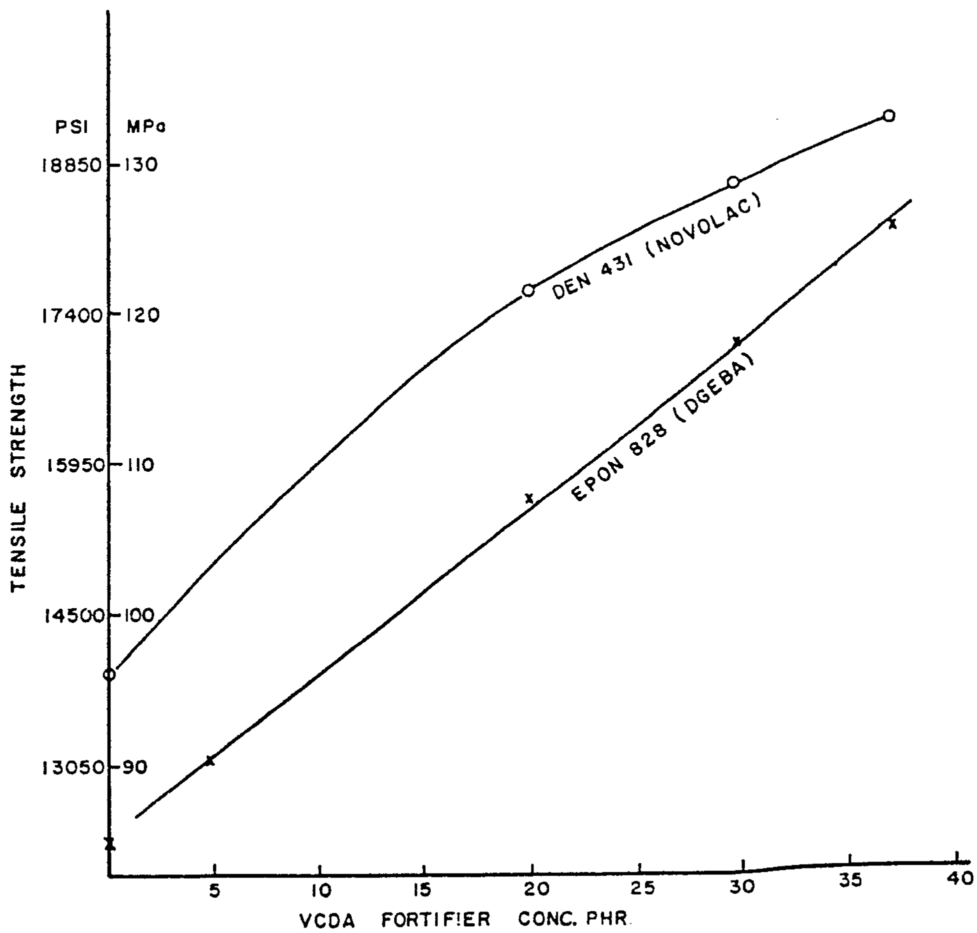
PSI MPa
18850 130
17400 120
15950 110
14500 100
13050 90
TENSILE STRENGTH
DEN 431 (NOVOLAC)
EPON 828 (DGEBA)
5 10 15 20 25 30 35 40
VCDA FORTIFIER CONC. PHR.

FIG. 3